# EUROPEAN PATENT APPLICATION

(11) **EP 1 818 383 A1**
(43) Date of publication of application: **15.08.2007**
(21) Application number: 05803879.5
(22) Date of filing: 09.11.2005
(51) Int. Cl.: C09K 17/50, C09K 17/02, C09K 17/32, C05F 5/00, A01N 25/08, A01N 63/02, A01G 1/00, A01G 7/00, C09K 101/00

(54) **POROUS CARBON MATERIAL IMPREGNATED WITH LIQUID BY-PRODUCT FROM AMINO ACID FERMENTATION**

(30) Priority: 19.11.2004 JP 2004335443
(71) Applicant: Ajinimoto Fine-Techno Co. Inc., Kawasaki-shi, Kanagawa 210-0801 (JP); Nagano Prefecture, Oaza Minami-Nagano Nagano-shi, Nagano 380-0837 (JP); Nakano City Agricultural Cooperative Society, Nakano-shi, Nagano 383-8588 (JP); Ajinomoto Co., Inc., Tokyo 104-8315 (JP)
(72) Inventor: MORIYA, Toshiaki, c/o Ajinomoto Fine-Techno Co Inc, Yokohama-shi, Kanagawa 230-0034 (JP); YUMURA, Koji, c/o Ajinomoto Fine-Techno Co., Inc., Yokohama-shi, Kanagawa 230-0034 (JP); SAKAMOTO, Kotaro, c/o Ajinomoto Fine-Techno Co Inc, Yokohama-shi, Kanagawa 230-0034 (JP); MOTOKI, Satoru, c/o Nagano Vegetable & Ornamental, Nagano-shi, Nagano 381-1211 (JP); SHIMIZU, Keiji, c/o Nakano City Agr. Coop. Society, Nakano-shi, Nagano 383-8588 (JP); TAKAHASI, Kazuhiko, c/o Nakano City Agr. Coop Soc., Nakano-shi, Nagano 383-8588 (JP); KASAHARA, Hidekazu, c/o Nakano City Agr. Coop Soc., Nakano-shi, Nagano 383-8588 (JP)
(74) Representative: Strehl Schübel-Hopf & Partner
(86) International application number: PCT/JP2005/020992
(87) International publication number: WO 2006/054566

(57) **Abstract**

In this application is disclosed an amino acid fermentation by-product liquid-impregnated porous carbon material, wherein a porous carbon material is impregnated with an amino acid fermentation by-product liquid. The inventive amino acid fermentation by-product liquid-impregnated porous carbon material is effective as an countermeasure against the source origin of soil disease injury and plant physiological disorder and have growth promoting effect on plant from initial growth to harvest thereof and even in continuous cropping.

## Description

### Technical Field

This invention relates to an amino acid fermentation by-product liquid-impregnated material wherein a porous carbon material is impregnated with an amino acid fermentation by-product liquid, and to a method for producing the same.

### Background Art

In plant rhizosphere soil of agricultural fields for field crops, fruit trees and the like, there exist many kinds of harmful materials for plant nurture, such as various kinds of gasses caused by metabolic reaction of rhizosphere soil microorganisms, dioxins, and residual agricultural chemicals. It is considered that accumulation of these harmful materials in soil causes simplification of the rhizosphere microorganism phase, lowering in bacteriostatic action, proliferation of germs, and the like, resulting in that the plant rhizosphere soil is changed to a soil in which soil diseases easily occur. In addition, such a phenomenon as allelopacy, which is induced by a harmful material originating from a plant, is also known. The allelopacy means "a phenomenon in which a chemical substance released from a plant gives some influence on other plants or microorganisms." The allelopacy is considered to be one of transition factors of vegetation in natural ecosystem, and to be one of causes of growth inhibition or continuous cropping injury (soil-disliking phenomenon) in field crops and permanent crops such as fruit trees in the field of agricultural production.

In recent years during which agricultural techniques have progressed, in order to reduce and control soil disease injury and plant physiological disorder, there have been introduced such countermeasures as introduction of the crop rotation system, input of a large amount of organic materials such as compost or soil treatment agents (rooting agent, growth promoting agent or the like), or soil disinfection with agricultural chemicals or high temperature treatment. However, these countermeasures are a soil treatment method in which only a soil material has been newly input (application of an organic material), or a part of soil properties has been sacrificed. Thus, they can not be effective measures as so-called countermeasures against sources, in which harmful materials accumulated in rhizosphere soil are removed.

On the other hand, a porous carbon material that can remove harmful materials accumulated in soil to reduce soil disease injury and plant physiological disorder, especially activated carbon has been employed as a soil conditioner. Since activated carbon can adsorb and remove harmful materials accumulated in rhizosphere soil caused by the porous structure thereof, dispersion of activated carbon is much effective as a countermeasure against sources. Further, activated carbon also has such functions of constantly supplying oxygen into soil by the adsorption-desorption reaction thereof, conditioning moisture of soil, and adjusting balance of soil microorganisms, thus is very useful as a soil conditioner. For example, asparagus, which is a perennial Liliaceae plant, demonstrates an increase in yield by dispersing and blending activated carbon in soil (see the non-patent documents 1 and 2 below), and activated carbon treatment for asparagus is increasing all over the country. Further, referring to the study results, application tests are attempted for various crops.

Furthermore, as one of the application techniques of activated carbon, there is known a technique in which another material is adsorbed on activated carbon. For example, a palm shell activated carbon having silk amino acid adsorbed thereon (see the patent document 1 below) and a fertilizer prepared by having carbide of beer lees or the like adsorb nitrogen, phosphoric acid, potassium, mineral or the like, are known (see the patent document 2 below).
Patent document 1: JP-A-2003-335592
Patent document 2: JP-A-2001-226183
Non-patent document 1: VEGETABLE AND ORNAMENTAL CROPS EXPERIMENT STATION, Agricultural technology to be newly popularized, Heisei 13 (2001) Second session, Reference No. 6 "Treatment with particulate activated carbon "HJA-40Y" upon replantation of asparagus can reduce allelopacy." [online] January 6, Heisei 15 (2003), Nagano Agricultural Comprehensive Research Center [October 13, Heisei 16 (2004)], Internet <URL: http://www.alps.pref.nagano.jp/hukyu/01-2index.htm>
Non-patent document 2: VEGETABLE AND ORNAMENTAL CROPS EXPERIMENT STATION, Agricultural technology to be newly popularized, Heisei 14 (2002) Second session, Reference No. 14 "Treatment with particulate activated carbon "HJA-100CW" upon replantation of asparagus can reduce allelopacy." [online] January 6, Heisei 15 (2003), Nagano Agricultural Comprehensive Research Center [October 13, Heisei 16 (2004)], Internet <URL: http://www.alps.pref.nagano.jp/hukyu/02-2index.htm>

### Disclosure of the Invention

### Problems to be Solved by the Invention:

It is an object of the present invention to provide amino acid fermentation by-product liquid-impregnated porous carbon materials which are effective as a countermeasure against the source origin of soil disease injury and plant physiological disorder and have growth promoting effect on plant from initial growth to harvest thereof and even in continuous cropping. It is another object of the present invention to provide methods for producing the same.

### Means for Solving the Problems:

The present inventors have made hard studies to achieve the aforementioned objects and found that it is possible to build up a material having both a soil conditioning effect of a porous carbon material and a fertilizer effect of an amino acid fermentation by-product liquid, by impregnating the surfaces of a porous carbon material with an amino acid fermentation by-product liquid, and completed the present invention based on these findings.

That is, the present invention includes the followings:
[1] An amino acid fermentation by-product liquid-impregnated porous carbon material wherein a porous carbon material is impregnated with an amino acid fermentation by-product liquid.
[2] The amino acid fermentation by-product liquid-impregnated porous carbon material described in [1] above, wherein the said amino acid fermentation by-product liquid-impregnated porous carbon material is in a solid state.
[3] The amino acid fermentation by-product liquid-impregnated porous carbon material described in [1] above, wherein the said amino acid fermentation by-product liquid-impregnated porous carbon material is in a slurry state.
[4] The amino acid fermentation by-product liquid-impregnated porous carbon material described in any one of [1] - [3] above, wherein the specific surface area of the said porous carbon material is from 600 to 2,000 m²/g.
[5] The amino acid fermentation by-product liquid-impregnated porous carbon material in solid described in [2] above, wherein the content of the said amino acid fermentation by-product liquid is from 1 to 70% by weight of the whole amino acid fermentation by-product liquid-impregnated porous carbon material.
[6] The amino acid fermentation by-product liquid-impregnated porous carbon material in slurry described in [3] above, wherein the content of the said amino acid fermentation by-product liquid is from 70 to 99% by weight of the whole amino acid fermentation by-product liquid-impregnated porous carbon material.
[7] A soil conditioner which comprises, as an active ingredient, the said amino acid fermentation by-product liquid-impregnated porous carbon material described in any one of [1] - [6] above.
[8] A method for producing an amino acid fermentation by-product liquid-impregnated porous carbon material, wherein a porous carbon material is impregnated with an amino acid fermentation by-product liquid.
[9] A method for producing an amino acid fermentation by-product liquid-impregnated porous carbon material in slurry, wherein a porous carbon material is finely pulverized, and then impregnated with an amino acid fermentation by-product liquid.

### Effects of the Invention:

By dispersing an inventive amino acid fermentation by-product liquid-impregnated porous carbon material on, and blending it with, the soil before fix planting or transplanting of fruit vegetables, leaf vegetables, root vegetables, flowering plants or fruit trees, growth promotion, especially increase in root weight, and significantly increased yield can be obtained. These effects can not be expected from the soil conditioning effect of a porous carbon material and a fertilizing effect of an amino acid fermentation by-product liquid which will be described later, and therefore, are synergistic.

### Best Mode for Carrying Out the Invention

The porous carbon material according to the present invention indicates carbonaceous materials in general, having many fine pores obtained by burning organic materials. Examples thereof include wood charcoal and activated carbon. The porous carbon material is characterized by having a multifunction such as molecular adsorption, catalytic action, support of a catalyst or a drug, humidity conditioning, a molecular sieve and the like, caused by the porous structure thereof. From the viewpoint of these functional activities, the specific surface area of a porous carbon material for use in the present invention is preferably from 250 to 2, 000 m²/g, and particularly preferably from 900 to 2,000 m²/g.

Among the porous carbon material, wood charcoal, for example, has a specific surface area of around from 250 to 600 m²/g. On the other hand, activated carbon, prepared by further developing pores of wood charcoal or the like with steam, chemical activation or the like, has a specific surface area around from 600 to 2,000 m²/g. In other words, as the porous carbon material for use in the present invention, an activated carbon prepared by activating wood charcoal, palm shell charcoal, coal or the like, with steam or chemicals is more preferred. All values of the specific surface area are determined by a volumetric method based on the nitrogen gas adsorption method.

The amino acid fermentation by-product liquid for use in the present invention denotes an amino acid-containing by-product liquid produced upon isolating and purifying the respective various types of amino acids, from various types of amino acid fermentation broths of glutamic acid, lysine, glutamine, etc. fermented from the main raw materials such as starch and molasses as the carbon source. Specific examples thereof include an effluent obtained by adjusting pH of a basic or neutral amino acid fermentation broth of lysine, glutamine or the like followed by passing the pH-adjusted fermentation broth through a strongly acidic cationic resin to make the amino acid to be adsorbed on the resin, and a concentrate of the effluent; and a mother liquor obtained by adjusting the pH of a fermentation broth of an acidic amino acid such as glutamic acid or the like to the isoelectric point with a mineral acid, followed by solid-liquid separation of the precipitated amino acid crystals, and a concentrate of the mother liquor. These fermentation by-product liquids contain, in addition to various types of amino acids (the content being from 5 to 14% by weight in the concentrated liquid), a lot of nutritive substances necessary for plant growth such as sugars, fermentation microorganisms; organic-form nitrogen, inorganic-form nitrogen, vitamins and the like, as solid components (the solid content being from 30 to 50% by weight) . Among them, there are some products that have been already registered as a liquid by-product nitrogen fertilizer and put on the market such as "PAL" (Registration number: Sei No. 74220) which is a phenylalanine fermentation by-product liquid and "Glutamine" (Kanagawa-prefecture No. 712) which is a glutamine fermentation by-product liquid. Further, if desired, these amino acid fermentation by-product liquids may be further added with general fertilizer ingredients such as nitrogen, phosphoric acid, potassium, minerals and the like, as long as they do not jeopardize the effects of the present invention.

The inventive amino acid fermentation by-product liquid-impregnated porous carbon material may be either in a solid state or a slurry state. The term "impregnation" used in the present application includes the meaning of "adsorption" or "support", and thus "impregnation" can be replaced by "adsorption" or "support" with no problems.

An amino acid fermentation by-product liquid-impregnated porous carbon material in solid is produced by mixing an amino acid fermentation by-product liquid and a porous carbon material with the use of, for example, a drum mixer to allow the surfaces of the porous carbon material to be impregnated with the amino acid fermentation by-product liquid. Thereupon, the pH is adjusted with an acidic solution, preferably aq. phosphoric acid which is useful as a fertilizer so that the pH of the obtained amino acid fermentation by-product liquid-impregnated porous carbon material gets to from 5.0 to 8. 0 (measured according to JIS standard "JIS K 1474: 1991" of the Japanese Standards Association (Foundation), hereinafter the same applies). Since the attached moisture beyond 30% by weight of the amino acid fermentation by-product liquid-impregnated porous carbon material may cause mold breeding, it may be dried with hot wind after the impregnation. Although there is no particular limitation on the blend ratio of an amino acid fermentation by-product liquid and a finely pulverized porous carbon material, both being raw materials, it is preferred from the view point of usability to determine the ratio between the former and the latter to (1-70 parts by weight) : (99-30 parts by weight). When the drying procedure is omitted, around 30% by weight of the amino acid fermentation by-product liquid employed is particularly preferred.

The inventive amino acid fermentation by-product liquid-impregnated porous carbon material in solid thus manufactured can be applied with no particular limitation, and applied for a whole field, ridges, planting grooves and planting holes. Upon application, soil blending of from 10 to 1,000 kg/10a (that is, 10 ares) is preferred.

On the other hand, the inventive amino acid fermentation by-product liquid-impregnated porous carbon material in slurry is produced as follows. First, a porous carbon material is finely pulverized with a pulverizer. Although diameters after the pulverization are not particularly limited, in order to enable the porous carbon material not to sink into an amino acid fermentation by-product liquid but to be mixed well with the liquid, an average particle diameter of not more than 150 µm of the porous carbon material is preferred. After that, an amino acid fermentation by-product liquid and the finely pulverized porous carbon material are stirred, for example, in a mixing tank to form a slurry to make the surfaces of the porous carbon material to be impregnated with the amino acid fermentation by-product liquid. On this occasion, pH adjustment is carried out with an acidic solution, preferably aq. phosphoric acid which is useful as a fertilizer, so as to give an amino acid fermentation by-product liquid-impregnated porous carbon material in slurry having a pH of from 5.0 to 8.0. Although the blending ratio of an amino acid fermentation by-product liquid and a finely pulverized porous carbon material is not particularly limited, from the viewpoint of usability, the former: the latter is preferably (70-90 parts by weight): (30-10 parts by weight).

The amino acid fermentation by-product liquid-impregnated porous carbon material in slurry thus manufactured can be applied with no particular limitation, and applied, for example, by souse or soil irrigation. Upon application, application of a 50-500 times diluted liquid by from 1,000 to 20,000 kg/10a is preferred.

### Examples

Hereinafter, the present invention will be described further in greater detail by means of manufacturing examples and application examples. In the manufacturing examples, "part" means part by weight.

### <Manufacturing Example 1>

Hereinafter, a method for producing an amino acid fermentation by-product liquid-impregnated porous carbon material in solid will be presented.
(a) To 70 parts of a particulate activated carbon "HJA-40Y" (manufactured by Aj inomoto Fine-Techno. Co., Inc.) was added 30 parts of a concentrated-type amino acid fermentation by-product liquid (ex Ajinomoto Co., Inc.; glutamine fermentation by-product liquid) having been treated with phosphoric acid so as to give a pH of 4.0 - 5.0. The resulting mixture was then subjected to impregnation processing in a drum mixer (manufactured by SUGIYAMA HEAVY INDUSTRIAL CO., LTD.), whereby an amino acid fermentation by-product liquid-impregnated porous carbon material in solid having a pH of from 5.0 to 8.0 and a moisture of 30% by weight or less, was obtained.
(b) The procedure as set forth in (a) above was similarly repeated except that the glutamine fermentation by-product liquid was replaced with a glutamic acid fermentation by-product liquid, a phenylalanine fermentation by-product liquid, or a lysine fermentation by-product liquid, whereby a glutamic acid fermentation by-product liquid-impregnated porous carbon material in solid, a phenylalanine fermentation by-product liquid-impregnated porous carbon material in solid, or a lysine fermentation by-product liquid-impregnated porous carbon material in solid, was obtained, respectively.

### <Manufacturing Example 2>

Hereinafter, a method for producing an amino acid fermentation by-product liquid-impregnated porous carbon material in solid, in which drying is carried out, will be presented.

To 50 parts of the aforementioned particulate activated carbon "HJA-40Y" was added 30 parts of a concentrated-type amino acid fermentation by-product liquid (ex Ajinomoto Co., Inc.; glutamine fermentation by-product liquid) having been treated with phosphoric acid so as to give a pH of 4.0 - 5.0. The resulting mixture was subjected to impregnation processing in a drum mixer (manufactured by SUGIYAMA HEAVY INDUSTRIAL CO., LTD.) and dried with hot wind at 180°C. After that, to the dried product was added additional 20 parts of the same amino acid fermentation by-product liquid to carry out further the impregnation processing, whereby an amino acid fermentation by-product liquid-impregnated porous carbon material in solid having a pH of from 5.0 to 8.0 and a moisture of 30% by weight or less, was obtained.

### <Manufacturing Example 3>

Hereinafter, a method for producing an amino acid fermentation by-product liquid-impregnated porous carbon material in slurry will be presented.

The aforementioned particulate activated carbon "HJA-40Y" was made into fine particles having an average diameter of 150 µm or less with a "Roller Mill Model 30-HD" (manufactured by Ishii Funsaiki). To 25 parts of the fine particles was added 75 parts of a concentrated-type amino acid fermentation by-product liquid (ex Ajinomoto Co., Inc.; glutamine fermentation by-product liquid) having been treated with phosphoric acid so as to give a pH of 4.0 - 5.0. The resulting mixture was stirred in a mixing tank to form a slurry and carry out impregnation treatment, whereby an amino acid fermentation by-product liquid-impregnated porous carbon material in slurry having a pH of 5.0 - 8.0, resulted.

### <Example 1: Japanese leaf vegetable, Komatsuna, Brassica campestris var. perviridis>

In order to evaluate germination and growth after the germination caused by applying the amino acid fermentation by-product liquid-impregnated porous carbon material in solid of Manufacturing Example 1, Komatsuna was used for carrying out a pot test. As the reference fertilizer, "Dried mycelium fertilizer derived from beer production process" (a dried mycelium fertilizer registered by Kanagawa Prefectural Governor)" being an organic fertilizer, was employed. Application amounts of the fertilizers in the pot test were designed based on the nitrogen content. For both of the amino acid fermentation by-product liquid-impregnated porous carbon material in solid and "Dried mycelium fertilizer derived from beer production process", a standard amount plot, a double amount plot and a triple amount plot were provided respectively. To all these experimental plots and a untreated plot provided as a plot wherein none of the porous carbon material and the organic fertilizer were applied, ammonium sulfate, calcium superphosphate and potassium chloride were applied respectively in amounts corresponding to 25 mg/pot in terms of N, P₂O₅ and K₂O. Here, the test was repeated twice, using 40 seeds/plot, 1/5000a Wagner pots and andosol soil (Yachimata-city, Chiba prefecture) as the test soil.

Table 1 shows the analysis results of the inventive amino acid fermentation by-product liquid-impregnated porous carbon material in solid and the reference fertilizer used in the present Example.

**Table 1**

| | Type of fertilizer | Name of fertilizer | Result of analysis (%) | | | |
|---|---|---|---|---|---|---|
| | | | Moisture | N | P₂O₅ | K₂O |
| Test material (present invention) | | Amino acid fermentation by-product liquid-impregnated porous carbon material in solid | 24.87 | 1.86 | 1.29 | 1.33 |
| control fertilizer | Organic fertilizer | "Dried mycelium fertilizer derived from beer production process" | 3.76 | 6.48 | 3.62 | 0.63 |

| | | | | | | |
|---|---|---|---|---|---|---|
| Analysis agency: Japan Fertilizer and Feed Inspection Association (Foundation) | | | | | | |

### [Observation]

On March 7, 2003, the amino acid fermentation by-product liquid-impregnated porous carbon material in solid of the invention and the "Dried mycelium fertilizer derived from beer production process" being the reference fertilizer were respectively blended with the soil, followed by seeding Komatsuna, which were grown in a constant temperature house. With regard to observation of the test result, the leaf length and fresh weight were checked on March 28, that is, 21 days after the seeding. Three times of germination check during the period and an intermediate leaf length check on March 14 were carried out. The results are shown in Table 2.

**Table 2**

| Experimental plot | | Application amount (g/pot) | Result of germination investigation | | | Result of growth investigation | | | |
|---|---|---|---|---|---|---|---|---|---|
| | | | Mar. 9 | Mar.10 | Mar.11 | Mar. 14 | Mar. 28 | | |
| | | | Germination percentage (%) | Germination percentage (%) | Germination percentage (%) | Leaf length (cm) | Leaf length (cm) | fresh weight (g/pot) | fresh weight index |
| Test material . (present invention) | Standard plot | 2.69 | 68 | 88 | 98 | 2.0 | 11.0 | 22.7 | 131 |
| | Double amount plot | 5.38 | 70 | 78 | 95 | 1.9 | 9.8 | 27.1 | 157 |
| | Triple amount plot | 8.06 | 70 | 83 | 93 | 1.9 | 9.8 | 29.7 | 172 |
| Reference fertilizer | Standard plot | 0.77 | 50 | 73 | 95 | 1.8 | 9.0 | 20.2 | 117 |
| | Double amount plot | 1.54 | 65 | 80 | 98 | 1.9 | 8.3 | 21.5 | 124 |
| | Triple amount plot | 2.31 | 63 | 83 | 98 | 1.8 | 8.5 | 22.2 | 128 |
| Untreated plot | | - | 55 | 55 | 83 | 1.9 | 8.8 | 17.3 | (100) |

| | | | | | | | | | |
|---|---|---|---|---|---|---|---|---|---|
| Analysis agency: Japan Fertilizer and Feed Inspection Association (Foundation) | | | | | | | | | |

### [Results]

The plots treated with the amino acid fermentation by-product liquid-impregnated porous carbon material in solid of the present invention gave, in both of the germination start date and germination percentage, equal or better results compared with the untreated plot and the reference fertilizer plots, and in growth after the germination, increases in leaf length and crude weight. For the plots wherein the inventive amino acid fermentation by-product liquid-impregnated porous carbon material in solid had been applied, particularly, the fresh weight showed such significant increase as 57% for the double amount plot and 72% for the triple amount plot.

### <Example 2: Round egg plant>

The amino acid fermentation by-product liquid-impregnated porous carbon material in solid of Manufacturing Example 1 and a particulate activated carbon "HJA-40Y" (manufactured by Ajinomoto Fine-Techno. Co., Inc.) were applied for an agricultural field test of a round egg plant in the second year in repeated cropping to investigate differences in effect on growth and yield between the amino acid fermentation by-product liquid-impregnated porous carbon material in solid and the activated carbon. A round egg plant "Koshinomaru (rootstock: disease resistant VF) " was used as the subject crop. With regard to an agricultural field, 5a of a field (in a second year in continuous cropping) for the round egg plant adjacent to the test field of the previous year were used. The test was carried out in one repetition, using 1.7a per plot. Cultivation density was as follows: row width: 230 cm; distance between the plants: 60 cm; one row planting; and 4-branch making up. In all the plots provided, an organic fertilizer "Yuki all eight" (100 kg/10a), a covering fertilizer "Superlong 424" (150 kg/10a) and an oyster shell fertilizer "Sunlime" (100 kg/10a) were applied, and pathogen and pest control was carried out by a conventional method.

Composition in the experimental plots were as follows:
(a) Untreated plot: application of the aforementioned fertilizers only; (non-application of the test materials)
(b) Experimental plot 1: application of the aforementioned fertilizers + 60 kg/10a of "HJA-40Y" before the planting (broadcasting);
(c) Experimental plot 2: application of the aforementioned fertilizers + 60 kg/10a of the amino acid fermentation by-product liquid-impregnated porous carbon material in solid before the planting (broadcasting).

### [Observation]

The planting was carried out on May 11, Heisei 14 (2002), and with regard to growth, stem diameter at the ground edge, plant height, number of nodes, and root weight were investigated for 10 round egg plants in each plot. The results are shown in Table 3. With regard to the yield, 40 plants in each plot were investigated, in which the yield was measured for the first 5 days of each month. The results are shown in Table 4.

**Table 3**

| Investigation date | Aug. 10 | | | Nov. 11 | | |
|---|---|---|---|---|---|---|
| | Plant height (cm) average of 10 stocks | Number of nodes (node) average of 10 stocks | Stem diameter (mm) average of 10 stocks | Stem diameter (mm) average of 10 stocks | Root weight of one stock (g) average of 10 stocks | Root weight index |
| Untreated plot | 130.7 | 13.0 | 26.1 | 27.3 | 137.0 | (100) |
| Experimental plot 1 | 132.0 | 13.0 | 27.4 | 29.5 | 172.6 | 126 |
| Experimental plot 2 | 135.2 | 14.0 | 26.0 | 27.4 | 171.2 | 125 |

| | | | | | | |
|---|---|---|---|---|---|---|
| Method of investigating the root weight: circumference 20 cm apart from a stock was dug with a sward scoop | | | | | | |

**Table 4**

| Investigation date | Jul. 1 - 5 | Aug. 1 - 5 | Sep. 1 - 5 | Oct. 1 - 5 | Total | Index |
|---|---|---|---|---|---|---|
| Untreated plot | 45.0(kg) | 51.6(kg) | 38.9(kg) | 43.0(kg) | 178.5 | (100) |
| Experimental plot 1 | 57.0 | 58.5 | 46.1 | 53.0 | 214.6 | 120 |
| Experimental plot 2 | 86.6 | 63.4 | 49.3 | 62.5 | 261.8 | 147 |

| | | | | | | |
|---|---|---|---|---|---|---|
| Yield investigation for 40 stocks in each plot (yield for the first 5 days of each month) | | | | | | |

### [Results]

In the growth investigation, although no large differences were observed among the plots, the plots wherein the amino acid fermentation by-product liquid-impregnated porous carbon material in solid or "HJA-40Y" was applied, exhibited slightly better results, as compared with the untreated plot. With regard to the root weight, the plots wherein "HJA-40Y" or the amino acid fermentation by-product liquid-impregnated porous carbon material in solid exhibited around 25% increase, as compared with the untreated plot.

With regard to the total value of yields, as compared with Untreated plot, increase was observed by 20% for Experimental plot 1 (60 kg/10a of "HJA-40Y" having been applied), and by 47% for Experimental plot 2 (60 kg/10a of the amino acid fermentation by-product liquid-impregnated porous carbon material in solid having been applied). It can be said that the amino acid fermentation by-product liquid-impregnated porous carbon material in solid has a more effect on yield, as compared with the activated carbon, although having a nearly equal effect on growth. In addition, it can be said that, since growth promoting, especially increase in root weight, and yield were observed for the second year in repeated cropping, the amino acid fermentation by-product liquid-impregnated activated carbon in solid exhibits a large effect on plant growth even for continuously cropped soil.

### <Example 3: Round egg plant>

A repetition experiment of Example 2 was carried out, in which further investigation was carried out for the growth effect of the amino acid fermentation by-product liquid-impregnated porous carbon material in solid of Manufacturing Example 1 on a round egg plant in a second year in continuous cropping and, at the same time, an inclining test was carried out to determine an appropriate application amount of the amino acid fermentation by-product liquid-impregnated porous carbon material in solid. As the reference materials, calcium peroxide (Nippon Caloxide Co., Ltd.) which is widely used as an oxygen-supplying material, and citric acid (Eisai Seikaken Co., Ltd.) which is widely used as a root-stimulating material were used. With regard to the agricultural field, 2a of the field (in a second year in continuous cropping) for the round egg plant adjacent to the test field were used. The test was carried out in one repetition, using 0.4a per plot. The subject crop, cultivation density, application of fertilizers, and disease and pest control were the same as those in Example 2. That is, the used subject crop was "Koshinomaru (rootstock: disease resistant VF)" being a round egg plant. Cultivation density was as follows: row width: 230 cm; distance between the plants: 60 cm; one row planting; and 4-branch training. In all the plots provided, the organic fertilizer "Yuki all eight" (100 kg/10a), the coated fertilizer "Superlong 424" (150 kg/10a) and the oyster shell fertilizer "Sunlime" (100 kg/10a) were applied, and disease and pest control was carried out by a conventional method.

Composition in the experimental plots were as follows:
(a) Untreated plot: application of the aforementioned fertilizers only (non-application of the test materials);
(b) Experimental plot 1: application of the aforementioned fertilizers + 30 kg/10a of the oxygen-supplying material and 60 kg/10a of the root-stimulating material before the planting (broadcasting);
(c) Experimental plot 2: application of the aforementioned fertilizers + 40 kg/10a of the amino acid fermentation by-product liquid-impregnated porous carbon material in solid before the fix planting (broadcasting);
(d) Experimental plot 3: application of the aforementioned fertilizers + 60 kg/10a of the amino acid fermentation by-product liquid-impregnated porous carbon material in solid before the planting (broadcasting);
(e) Experimental plot 4: application of the aforementioned fertilizers + 80 kg/10a of the amino acid fermentation by-product liquid-impregnated porous carbon material in solid before the planting (broadcasting).

### [Observation]

The planting was carried out on May 3, Heisei 15 (2003) and, wich regard to the growth, stem diameter at the ground edge, plant height, number of nodes, and root weight were investigated for the egg plant of each plot. The results are shown in Table 5, which regard to the yield, 10 plants per plot were investigated, in which the yield was measured for the first 5 days of each month. The results are shown in Table 6.

**Table 5**

| Investigation date | Sep. 22 | Sep. 22 | Oct. 1 | Nov. 16 | |
|---|---|---|---|---|---|
| | Plant height (cm) average of 10 stocks | Number of nodes (node) average of 6 stocks | Stem diameter (mm) average of 10 stocks | Root weight of one stock (g) average of 5 stocks | Root weight index |
| Untreated plot | 149.9 | 20.0 | 28.5 | 205 | (100) |
| Experimental plot 1 | 151.8 | 21.0 | 29.6 | 250 | 122 |
| Experimental plot 2 | 144.0 | 21.3 | 27.9 | 225 | 110 |
| Experimental plot 3 | 156.1 | 20.8 | 29.0 | 260 | 127 |
| Experimental plot 4 | 151.6 | 20.5 | 31.8 | 265 | 129 |

**Table 6**

| Investigation date | Jul. 1-5 | Aug. 1-5 | Sep. 1-5 | Total | Index |
|---|---|---|---|---|---|
| Untreated plot | 15.0(kg) | 9.7(kg) | 8.5(kg) | 33.2 | (100) |
| Experimental plot 1 | 18.0 | 9.2 | 8.8 | 36.0 | 108 |
| Experimental plot 2 | 19.0 | 11.6 | 8.7 | 39.3 | 118 |
| Experimental plot 3 | 20.5 | 12.0 | 9.8 | 42.3 | 127 |
| Experimental plot 4 | 22.0 | 12.0 | 10.6 | 44.6 | 134 |

| | | | | | |
|---|---|---|---|---|---|
| Yield investigation for 10 stocks in each plot (yield for the first 5 days of each month) | | | | | |

### [Results]

In the growth investigation, the plots wherein the amino acid fermentation by-product liquid-impregnated porous carbon material in solid was applied and Experimental plot 1 (wherein the oxygen-supplying material + the root-stimulating material were applied) exhibited no large differences, as compared with Untreated plot. However, with regard to the root weight, increase was observed for the plot wherein the oxygen-supplying material and root-stimulating material were applied, and for the plot wherein the amino acid fermentation by-product liquid-impregnated porous carbon material in solid was applied, as compared with Untreated plot.

With regard to the summed value in the yield investigation, increase was observed by 8% for Experimental plot 1 (wherein 30 kg/10a of the oxygen-supplying material and 60 kg/10a of the root-stimulating material having been applied), and by 18-34% for Experimental plots 2-4 (wherein 40-80 kg/10a of the amino acid fermentation by-product liquid-impregnated porous carbon material in solid) having been applied, as compared with Untreated plot.

Although the amino acid fermentation by-product liquid-impregnated porous carbon material in solid (Experimental plots 2-4), as compared with the oxygen-supplying material and root-stimulating material (Experimental plot 1), exhibited an approximately equal effect on growth, but a more effect on yield. Thus, it was demonstrated that the amino acid fermentation by-product liquid-impregnated porous carbon material in solid is effective for plant growth even for the soil in the second year.

Further, a rough standard of the appropriate use amount of the amino acid fermentation by-product liquid-impregnated porous carbon material in solid is considered to be from 60 to 80 kg/10a.

### <Example 4: Tomato>

While employing tomato "Momotaro eight " as the object crop, the growth effect of the amino acid fermentation by-product liquid-impregnated porous carbon material in solid was investigated. The test materials were the amino acid fermentation by-product liquid-impregnated porous carbon material in solid of Manufacturing Example 1 and a granullar activated carbon "HJA-40Y" (manufactured by Ajinomoto Fine-Techno. Co., Inc.), and as the control materials were used, as was the case with Example 3, calcium peroxide (Nippon Caloxide Co., Ltd.) which is widely used as an oxygen-supplying material and citric acid (Eisai Seikaken Co., Ltd.) which is widely used as a root-stimulating material.

The cultivation experiment was carried out, for each experimental plot, by planting 6 tomatoes in a drain bed (isolated bed) in a test house. For all the plots provided, "Bionorganic S" being an organic fertilizer (50 kg/10a), "Superlong 424" being a delayed release fertilizer (100 kg/10a) , "Sunlime plus" being a fertilizer in which oyster shell is blended with magnesium hydroxide, and "Long Syocal 140" being a delayed release fertilizer (20 kg/10a) were applied, and disease and pest control was carried out by a conventional method.

Composition in the experimental plots were as follows:
(a) Untreated plot: application of the aforementioned fertilizers only (non-application of test materials);
(b) Experimental plot 1: application of the aforementioned fertilizers + 30 kg/10a of the oxygen-supplying material and 60 kg/10a of the root-stimulating material before the planting (broadcasting);
(c) Experimental plot 2: application of the aforementioned fertilizers + 60 kg/10a of "HJA-40Y" before the planting (broadcasting);
(d) Experimental plot 3: application of the aforementioned fertilizers + 60 kg/10a of the amino acid fermentation by-product liquid-impregnated porous carbon material in solid before the planting (broadcasting);
(e) Experimental plot 4: application of the aforementioned fertilizers + 80 kg/10a of the amino acid fermentation by-product liquid-impregnated porous carbon material in solid before the planting (broadcasting).

### [Observation]

The planting was carried out on May 29, Heisei 15 (2003) and, with regard to the growth, respective averages for 6 tomatoes in each plot were investigated of the stem diameters at the soil surface part, stem diameters at the fifth flower cluster, whole length, step number of the flower cluster, and the root weight on December 8, Heisei 15 (2003). The results are shown in Table 7. With regard to the yield, number of fruits per stock, yields per stock, an average fruit weight, percentage of A rank fruits and sugar content were investigated from the start of harvest to the end thereof (July 18 - December 6, Heisei 15 (2003)). The results are shown in Table 8.

**Table 7**

| | Stem diameter at the soil surface part (mm) | Stem diameter at the fifth flower cluster (mm) | Whole length (cm) | Step number of flower cluster | Root weight of one stock (g) | Root weight index |
|---|---|---|---|---|---|---|
| Untreated plot | 11.9 | 10.1 | 295.2 | 13.7 | 36.5 | (100) |
| Experimental plot 1 | 12.2 | 10.8 | 328.3 | 15.0 | 34.7 | 95 |
| Experimental plot 2 | 11.7 | 11.6 | 343.2 | 15.0 | 37.2 | 102 |
| Experimental plot 3 | 12.6 | 11.2 | 309.2 | 13.8 | 41.7 | 114 |
| Experimental plot 4 | 11.6 | 10.9 | 328.3 | 14.8 | 41.0 | 112 |

| | | | | | | |
|---|---|---|---|---|---|---|
| Date of investigation: Dec. 8 Measured value: an average of 6 stocks | | | | | | |

**Table 8**

| | Number of fruits per one stock (Nos.) | Yield per stock | | Average fruit weight (g) | Percentage of Grade A rank (%) | Sugar content (%) |
|---|---|---|---|---|---|---|
| | | (g) | Index of yield per one stock | | | |
| Untreated plot | 20.3 | 2,200 | (100) | 108.4 | 98 | 6.3 |
| Experimental plot 1 | 22.7 | 2,609 | 119 | 114.9 | 98 | 6.7 |
| Experimental plot 2 | 21.5 | 2,595 | 118 | 120.7 | 96 | 6.5 |
| Experimental plot 3 | 24.2 | 2,971 | 135 | 122.8 | 99 | 5.7 |
| Experimental plot 4 | 23.8 | 2,975 | 135 | 125.0 | 99 | 6.2 |

| | | | | | | |
|---|---|---|---|---|---|---|
| Yield investigation: from the start of harvest to the end thereof (Jul. 18 - Dec. 8) | | | | | | |

### [Results]

In the growth investigation, as compared with Untreated plot, Experimental plot 1 (the oxygen-supplying material + the root-stimulating material) exhibited relatively better results, although exhibiting inferior in root weight, and Experimental plots 2, 3 and 4 ("HJA-40Y", the amino acid fermentation by-product liquid-impregnated porous carbon material in solid) exhibited relatively better results, although some of them exhibiting disadvantage in stem diameter at the soil surface. Especially, in Experimental plots 3 and 4, increase in root weight by around 10% was observed to give a result that the amino acid fermentation by-product liquid-impregnated porous carbon material in solid is especially effective for the growth of root weight.

With regard to the yield per one stock, as compared with Untreated plot, increase was observed by 19% for Experimental plot 1 (the oxygen-supplying material + the root-stimulating material) and by 18% for Experimental plot 2 (the activated carbon). Experimental plots 3 and 4, wherein the amino acid fermentation by-product liquid-impregnated porous carbon material in solid was applied, exhibited such a large increase by 35% as compared with Untreated plot. Further, with regard to the average fruit weight also, Experimental plots 3 and 4, wherein the amino acid fermentation by-product liquid-impregnated porous carbon material in solid was applied, gave the best result.

From these results, it can be said that, in raising tomato, the amino acid fermentation by-product liquid-impregnated porous carbon material in solid is effective for both of growth and yield thereof.

### <Example 5: Cucumber>

While employing Cucumber "V-road" as the subject crop, the growth effect of the various amino acid fermentation by-product liquid-impregnated porous carbon materials in solid, which had been produced in the similar way to that of the amino acid fermentation by-product liquid-impregnated porous carbon material in solid as in Manufacturing Example 1, was examined.

That is, the test materials were a glutamine fermentation by-product liquid-impregnated porous carbon material in solid, a glutamic acid fermentation by-product liquid-impregnated porous carbon material in solid and a lysine fermentation by-product liquid-impregnated porous carbon material in solid, as well as a glutamine fermentation by-product liquid (Ajinomoto Co., Inc.), a glutamic acid fermentation by-product liquid (Ajinomoto Co., Inc.), and a lysine fermentation by-produce liquid (Ajinomoto Co., Inc.), and a granular activated carbon "HJA-40Y" (Ajinomoto Fine-Techno. Co., Inc.).

Here, application amounts of the fertilizers were designed based on the nitrogen content.

In addition, as virgin soil to be contrasted with continuously cropped soil, "potting for pots (trade name: PNP 17. A culture soil with a pH of 6.0, which is prepared by adding a wetting agent and a fertilizer to 60% of white peat, 20% of black peat, 10% of vermiculite (2-3 mm) and 10% of pearlite (fine particles 1-7.5 mm), to which 60 kg/m2 of Clay Granvle was mixed.)" manufactured by Klasmann-Deilmann GmbH was used. Here, N: P: K=210: 240: 270 mg/L. On the other hand, as for continuously cropped soil, a soil in which cucumber had been continuously cropped for 10 years or more was used.

The constitutions of experimental plots were as follows. Six stocks were planted in each of the experimental plots.
(a) Virgin soil
   1) Untreated plot: virgin soil (non-application of test materials)
   2) Experimental plot 1: virgin soil + application of 2.24 g/pot of the amino acid (glutamine) fermentation by-product liquid-impregnated porous carbon material in solid.
   3) Experimental plot 2: virgin soil + application of 2.24 g/pot of the amino acid (glutamic acid) fermentation by-product liquid-impregnated porous carbon material in solid.
   4) Experimental plot 3: virgin soil + application of 2.24 g/pot of the amino acid (lysine) fermentation by-product liquid-impregnated porous carbon material in solid.
   5) Experimental plot 4: virgin soil + application of 0.67 g/pot of the glutamine fermentation by-product liquid.
   6) Experimental plot 5: virgin soil + application of 0.67 g/pot of the glutamic acid fermentation by-product liquid.
   7) Experimental plot 6: virgin soil + application of 0.67 g/pot of the lysine fermentation by-product liquid.
   8) Experimental plot 7: virgin soil + application of 1.57 g/pot of "HJA-40Y" at potting + application of 0.67 g/pot of the glutamine fermentation by-product liquid after 10 days.
   9) Experimental plot 8: virgin soil + application of 1.57 g/pot of "HJA-40Y".
(b) Continuously cropped soil
   1) Untreated plot: continuously cropped soil (non-application of test materials)
   2) Experimental plot 1: continuously cropped soil + application of 2.24 g/pot of the amino acid (glutamine) fermentation by-product liquid-impregnated porous carbon material in solid.
   3) Experimental plot 2: continuously cropped soil + application of 2.24 g/pot of the amino acid (glutamic acid) fermentation by-product liquid-impregnated porous carbon material in solid.
   4) Experimental plot 3: continuously cropped soil + application of 2.24 g/pot of the amino acid (lysine) fermentation by-product liquid-impregnated porous carbon material in solid.
   5) Experimental plot 4: continuously cropped soil + application of 0.67 g/pot of the glutamine fermentation by-product liquid.
   6) Experimental plot 5: continuously cropped soil + application of 0.67 g/pot of the glutamic acid fermentation by-product liquid.
   7) Experimental plot 6: continuously cropped soil + application of 0. 67 g/pot of the lysine fermentation by-product liquid.
   8) Experimental plot 7: continuously cropped soil + application of 1.57 g/pot of "HJA-40Y" at potting + 0.67 g/pot of the glutamine fermentation by-product liquid after 10 days.
   9) Experimental plot 8: continuously cropped soil + application of 1.57 g/pot of "HJA-40Y".

### [Observation]

On September 29, 2004, seeds were sowed on 72-cell tray which had been filled with "Traysubstrate (trade name: a culture soil prepared by adding a wetting agent and a fertilizer to a mixture of 25% of white peat, 45% of black peat, 25% of vermiculite and 5% of pearlite (fine particles 0.6-2.5 mm), to which 100 g/m2 of a separately added trace element were mixed) for sowing" manufactured by Klasmann-Deilmann GmbH. Here, N: P: K=112: 128: 144 mg/L. Raising of seedlings was performed while setting soil temperature and air temperature at 25□C by utilizing a heating wire.

On October 25, the virgin soil and continuously cropped soil having been treated in accordance with the composition of respective experimental plots were filled in black plastic pots having a diameter of 9 cm. On the following day (October 26), the cucumber seedlings were transplanted to the pots filled with the soil, to each of which 50 ml of water was slopped. The cucumber seedlings were at an age of developing one true leaf when they were transplanted. On October 29, since the cucumbers got anthracnose (although slight generation, anthracnose generated uniformly over the whole experimental plots without differences among the experimental plots), 1,000-time diluted "Quinondo flowable" was broadcasted. After that, management was carried out according to conventional methods, and on November 15 (48 days after the sowing, and 20 days after the transplantation), plant height, stem diameter at the ground edge, fresh weight (above-ground part and under-ground part) and dried weight were investigated. The results are shown in Table 9.

**Table 9**

| | | | | | | |
|---|---|---|---|---|---|---|
| | Plant height (cm) | Stem diameter (cm) | Fresh weight (g) | (above-ground part) (g) | (under-ground part) (g) | Dried weight (g) |

| Virgin soil | | | | | | |
|---|---|---|---|---|---|---|
| Untreated plot | 14.1 | 0.4 | 8.1 | 6.9 | 1.3 | 3.1 |
| Experimental plot 1 | 15.1 | 0.5 | 11.0 | 8.8 | 2.2 | 3.6 |
| Experimental plot 2 | 17.8 | 0.5 | 12.4 | 10.3 | 2.1 | 3.7 |
| Experimental plot 3 | 18.0 | 0.5 | 12.1 | 9.6 | 2.5 | 3.8 |
| Experimental plot 4 | 15.6 | 0.5 | 7.8 | 6.7 | 1.0 | 2.9 |
| Experimental plot 5 | 12.8 | 0.4 | 6.0 | 5.3 | 0.7 | 2.3 |
| Experimental plot 6 | 17.7 | 0.5 | 8.9 | 7.7 | 1.1 | 2.2 |
| Experimental plot 7 | 16.0 | 0.4 | 8.7 | 7.2 | 1.5 | 3.0 |
| Experimental plot 8 | 15.7 | 0.4 | 8.6 | 7.2 | 1.4 | 3.1 |

| Continuously cropped soil | | | | | | |
|---|---|---|---|---|---|---|
| Virgin soil | 10.1 | 0.3 | 4.8 | 3.7 | 1.1 | 2.1 |
| Experimental plot 1 | 11.0 | 0.4 | 6.4 | 5.2 | 1.1 | 2.7 |
| Experimental plot 2 | 12.0 | 0.4 | 7.2 | 5.9 | 1.3 | 3.1 |
| Experimental plot 3 | 10.1 | 0.3 | 4.7 | 3.8 | 0.9 | 2.1 |
| Experimental plot 4 | 6.8 | 0.2 | 3.9 | 3.3 | 0.6 | 0.7 |
| Experimental plot 5 | 9.0 | 0.2 | 3.6 | 3.1 | 0.6 | 1.0 |
| Experimental plot 6 | 9.0 | 0.3 | 3.8 | 3.1 | 0.7 | 1.8 |
| Experimental plot 7 | 9.4 | 0.3 | 4.7 | 3.9 | 0.9 | 2.3 |
| Experimental plot 8 | 9.9 | 0.3 | 4.0 | 3.3 | 0.7 | 1.9 |

| | | | | | | |
|---|---|---|---|---|---|---|
| Measured value: an average of 5 stocks | | | | | | |

### [Results]

### (a) Virgin soil

With regard to the plant height, Experimental plots 1, 2 and 3, wherein the amino acid fermentation by-product liquid-impregnated porous carbon materials in solid were applied, gave better results as compared with Untreated plot, but they exhibited no large differences as compared with the other experimental plots.

With regard to the stem diameter, no differences were observed.

With respect to the fresh weight, Experimental plots 1, 2 and 3, wherein the amino acid fermentation by-product liquid-impregnated porous carbon materials in solid were applied, gave better results than any other Experimental plots. In particular, the fresh weight of the under-ground part, that is, the root weight was around 180-150% as compared with that in Untreated plot.

With regard to the dried weight also, Experimental plots 1, 2 and 3, wherein the amino acid fermentation by-product liquid-impregnated porous carbon materials in solid were applied, gave better results than any other Experimental plots, although there were no such large differences as those in fresh weight.

### (b) Continuously cropped soil

Every Experimental plot of the continuously cropped soil was worse in all the values of plant height, fresh weight and dried weight, as compared with those for Experimental plots of the virgin soil, which is considered to be attributable to allelopacy.

Although the values were worse as compared with those for Experimental plots of the virgin soil, Experimental plots 1, 2 and 3, wherein the amino acid fermentation by-product liquid-impregnated porous carbon materials in solid were applied, gave better results in plant height, fresh weight and dried weight than the other Experimental plots.

From the results, it is possible to say that the amino acid fermentation by-product liquid-impregnated porous carbon material in solid is effective for growth and yield in both of virgin soil and continuously cropped soil. Further, it was revealed that application of the material in solid is more effective for growth and yield than application of the amino acid fermentation by-product liquid alone (Experimental plots 4,5 and 6), application of the activated carbon alone (Experimental plot 8) and application of the amino acid fermentation by-product liquid and the activated carbon (Experimental plot 7).

## Claims

1. An amino acid fermentation by-product liquid-impregnated porous carbon material wherein a porous carbon material is impregnated with an amino acid fermentation by-product liquid.

2. The amino acid fermentation by-product liquid-impregnated porous carbon material of Claim 1, wherein the said amino acid fermentation by-product liquid-impregnated porous carbon material is in a solid state.

3. The amino acid fermentation by-product liquid-impregnated porous carbon material of Claim 1, wherein the said amino acid fermentation by-product liquid-impregnated porous carbon material is in a slurry state.

4. The amino acid fermentation by-product liquid-impregnated porous carbon material of any one of Claims 1 - 3, wherein the specific surface area of the said porous carbon material is from 600 to 2,000 m²/g.

5. The amino acid fermentation by-product liquid-impregnated porous carbon material in solid of Claim 2, wherein the content of the said amino acid fermentation by-product liquid is from 1 to 70% by weight of the whole amino acid fermentation by-product liquid-impregnated porous carbon material.

6. The amino acid fermentation by-product liquid-impregnated porous carbon material in slurry of Claim 3, wherein the content of the said amino acid fermentation by-product liquid is from 70 to 99% by weight of the whole amino acid fermentation by-product liquid-impregnated porous carbon material.

7. A soil conditioner which comprises, as an active ingredient, the said amino acid fermentation by-product liquid-impregnated porous carbon material of any one of Claims 1 - 6.

8. A method for producing an amino acid fermentation by-product liquid-impregnated porous carbon material, wherein a porous carbon material is impregnated with an amino acid fermentation by-product liquid.

9. A method for producing an amino acid fermentation by-product liquid-impregnated porous carbon material in slurry, wherein a porous carbon material is finely pulverized, and then impregnated with an amino acid fermentation by-product liquid.
